# EUROPEAN PATENT SPECIFICATION

(11) **EP 3 590 064 B1**
(45) Date of publication and mention of the grant of the patent: **29.05.2024**
(21) Application number: 18708561.8
(22) Date of filing: 21.02.2018
(51) Int. Cl.: G06F 21/60

(54) **MANAGING ACCESS CONTROL PERMISSION GROUPS**
VERWALTEN VON BERECHTIGUNGSGRUPPEN FÜR DIE ZUGRIFFSKONTROLLE
GESTION DE GROUPES D'AUTORISATIONS DE CONTRÔLE D'ACCÈS

(30) Priority: 01.03.2017 US 201762465583 P
(43) Date of publication of application: 08.01.2020
(73) Proprietor: Carrier Corporation, Jupiter, FL 33478 (US)
(72) Inventor: HADZIC, Tarik, Cork (IE); HARIS, Gavranovic, 71000 Sarajevo (BA); FLORENTINO, Blanca, Cork (IE); MARCHIOLI, John, Pittsford, New York 14534 (US); HARRIS, Philip J., Cork (IE); BOUBEKEUR, Menouer, Cork (IE); TIWARI, Ankit, East Hartford, Connecticut 06108 (US); GAUTHIER, Ed, Pittsford, New York 14534 (US)
(74) Representative: Dehns
(86) International application number: PCT/US2018/018958
(87) International publication number: WO 2018/160409

(56) References cited:
- WO-A1-2016/064470
- US-B1- 9 264 449

## Description

The subject matter disclosed herein relates generally to physical access control systems (PACS), and more particularly to how improve and reduce the number of access control groups required for an enterprise.

Physical access control systems (PACS) prevent unauthorized individuals access protected to areas. Individuals who have a credential (e.g., card, badge, RFID card, FOB, or mobile device) present it at an access point (e.g., swipe a card at a reader) and the PACS makes an almost immediate decision whether to grant them access (e.g., unlock the door). The decision is usually computed at a controller by checking a permissions database to ascertain whether there is a static permission linked to requester's credential. If the permission(s) are correct, the PACS unlocks the door as requested providing the requestor access. Typically, with static permissions, such a request for access can be made at a given time of the day and access will be granted. In standard deployment of a PACS, a permission(s) database is maintained at a central server and relevant parts of the permissions database are downloaded to individual controllers that control the locks at the doors.

Maintaining the correct list of permissions for each cardholder is done through access administration process and can be complex, time consuming and prone to errors. In addition, the database of permissions can be large especially as the scale of an enterprise grows large. Such large databases can consume significant amounts of memory on a controller. Moreover, because of the size of the database, it can be very time consuming to update controllers by downloading databases from the central server to controllers every time there is a change in any permission(s), credential, controller, or users. Such deployments therefore require more costly installations, by either installing more powerful controllers or larger number of controllers.

In order to simplify administration, the permissions are often organized into groups and roles which are sometimes called access levels. Administrators then assign groups of permissions to cardholder credentials which simplifies administration. However, the number of groups grows over time and can become complex, time consuming, and error-prone to maintain. Furthermore, cardholders can accumulate unused or infrequently used permissions, that cannot be easily removed from cardholders given that they are combined with other permissions within access levels. WO 2016/064470 discloses a system for auditing physical access to a resource including a permissions database, a policy database, a processor to execute at least one policy of the policy database to generate an outcome and compare the outcome with an appropriate permission record of the permission database. A scheduler triggers the processor to execute the policies and compare to the permission records.

According to an exemplary embodiment, described herein is a method of managing access control permissions groups. The method includes acquiring a permissions database having user access control permissions groups and links between a user and at least one permission of a plurality of permissions and the groups, identifying an importance associated with a permission of the plurality of permissions associated with the user, wherein the importance is an importance to preserve a permission of the plurality of permissions associated with the user; and identifying an importance of groups, the importance of groups being to preserve definitions of permission groups associated with each existing permission group; wherein the importance of groups is based on at least one of frequency of use of permissions, time of use of permissions, last use of a permissions within the group; a number of cardholders assigned to group, the roles of cardholders assigned to group, an average number of permissions the cardholders assigned to group have, and a rule based policy, revising the access control permissions groups in response to the importance associated with the permission of the plurality of permissions associated with the user and the importance of groups.

Optionally, further embodiments could include constructing permission groups when no initial groups have been provided - this is equivalent to restructuring permission groups where each permission belongs to a separate group containing only that permission.

Embodiments may include that the importance is based on at least one of frequency of use of a permission, time of use of a permission, and last use of a permission.

Embodiments may include that the importance is based on at least one of a role of the user, a number of permissions the user has, an assigned importance, and a rule based policy.

Embodiments may include an administrator identifying an importance to remove a permission of the plurality of permissions associated with the user.

Embodiments may include an administrator identifying the importance to preserve a permission of the plurality of permissions associated with the user.

Embodiments may include an administrator identifying an importance to preserve a permissions group already defined in the system.

Embodiments may include that the acquiring includes an existing permissions database.

Embodiments may include that the revising includes managing the permissions groups to maintain all existing permissions.

Embodiments may include that the revising includes managing the permissions groups permitting an existing permission to be eliminated.

Embodiments may include that the revising includes managing the permissions groups permitting an existing permission to be added.

Embodiments may include an administrator refining the revised access control permissions groups.

Embodiments may include that the refining includes the administrator at least one of: rejecting a revised access control permissions group; accepting a revised access control permissions group; editing a revised access control permissions group; and editing data associated with a revised access control permissions group.

Embodiments may include repeating the revising.

Also described herein is a method of managing access control permissions groups. The method includes identifying an importance associated with a permission of the plurality of permissions associated with the user, and generating a permissions database having user access control permissions groups and links between a user and at least one permission of a plurality of permissions and the groups based on at least one importance.

Embodiments may include that the importance is based on at least one of frequency of use of a permission, time of use of a permission, and last use of a permission.

Further, described herein in another embodiment is a physical access control system for protecting a resource with optimized access control permissions groups. The physical access control system including a plurality of users, each user having a credential, the user presenting the credential to request access to a resource protected by a door, the user having assigned access control permissions groups, the access control permissions groups having assigned to a set of access control permissions, a reader in operative communication with the credential and configured to read user information from the credential, wherein the user information includes at least a user ID, and a controller executing process to determine if the user is to be granted access to the resource based on the user information and the permissions database, the controller disposed at the door to permit access to the resource via the door. Where, the access control permissions groups have been revised in accordance with the methods described herein.

Also described herein is a physical access control system server having a database of a plurality of access control permissions associated with a plurality of users and a plurality of access control permissions groups. The physical access control system server including software to access the permissions database having access control permissions groups and at least one permission of a plurality of permissions, and revise the access control permissions groups.

Other aspects, features, and techniques of embodiments will become more apparent from the following description taken in conjunction with the drawings.

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 depicts a standard deployment and operation of a conventional PACS;
FIG. 2 is a simplified diagram depicting an access control administration employing permissions groups that evolve over time;
FIG. 3 is flowchart depicting a method of enhancing access control permission groups in accordance with an embodiment; and
FIG. 4 is a simplified diagram of optimized groups while maintaining existing permissions in accordance with an embodiment.

In general, embodiments herein relate to managing the grouping of static permissions and linking cardholders to new groups in a way that cardholders keep the same exact set of permissions as before but fewer groups have to be maintained in the system. In addition, or in the alternative also described herein is a method to manage groups in approximate way, where the number of groups can be reduced even further by permitting cardholders forfeit unused or lesser important permissions. The management of groups of permissions is facilitated by removal of unused permissions, infrequently used permissions, or reclassification of permissions designated by administrator as undesirable, but which cannot be easily removed through unassignment of access levels since that would lead to loss of legitimate permissions. Finally, the management includes optimizing group permissions while incorporating administrator input which is provided during extraction.

For the purposes of promoting an understanding of the principles of the present disclosure, reference will now be made to the embodiments illustrated in the drawings, and specific language will be used to describe the same. It will nevertheless be understood that no limitation of the scope of this disclosure is thereby intended. The following description is merely illustrative in nature and is not intended to limit the present disclosure, its application or uses. It should be understood that throughout the drawings, corresponding reference numerals indicate like or corresponding parts and features. As used herein, the term controller refers to processing circuitry that may include an application specific integrated circuit (ASIC), an electronic circuit, an electronic processor (shared, dedicated, or group) and memory that executes one or more software or firmware programs, a combinational logic circuit, and/or other suitable interfaces and components that provide the described functionality.

Additionally, the term "exemplary" is used herein to mean "serving as an example, instance or illustration." Any embodiment or design described herein as "exemplary" is not necessarily to be construed as preferred or advantageous over other embodiments or designs. The terms "at least one" and "one or more" are understood to include any integer number greater than or equal to one, i.e. one, two, three, four, etc. The terms "a plurality" are understood to include any integer number greater than or equal to two, i.e. two, three, four, five, etc. The term "connection" can include an indirect "connection" and a direct "connection".

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in Figure X may be labeled "Xa" and a similar feature in Figure Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

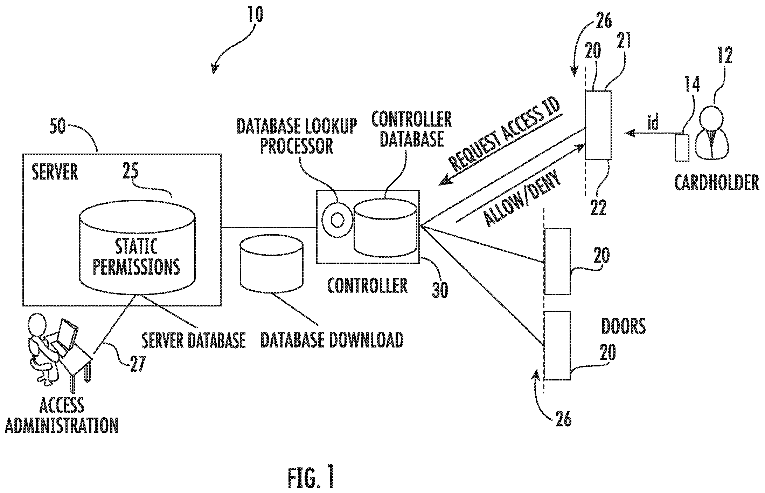

FIG 1 depicts a relatively standard deployment and operation of a PACS 10. In the figure, a user 12 with a credential 14 e.g., cardholder arrives at a reader 20 at a given access point with a lock 22 e.g., locked door, gate etc. controlling access to a protected space 26. The user 12 presents the credential 14 (e.g., badge, FOB, or mobile device) which is read by the reader 20 and identification information stored on the credential 14 is accessed and transmitted to a local controller 30. The controller 30 compares the identification information from the credential 14 with a permissions database 25 on the controller 30 to ascertain whether there is a static permission 25 linked to user's credential 14. If the permission(s) 25 are correct, i.e., there is a match, and the particular credential 14 has authorization to access the protected space 26, the controller 30 then sends a command to the door controller or lock 21 to unlock the door 22 as requested providing the user or requestor 12 access. The controller 30 in this instance, makes an almost immediate decision whether to grant the access (e.g., unlock the door). Users 12 also expect a rapid response, waiting at the access point of access decisions would be very undesirable and wasteful. In a conventional deployment of a PACS, a set of static permission(s) database 25 is maintained at a central server 50. To ensure rapid response when queried, relevant parts of the permissions database are downloaded to individual controllers 30 that control the locks 22 at the doors 20.

In many PACS 10, such as the access control system 10 shown in FIG. 1, neither the card readers 22 nor the credentials 14 e.g., access cards have any appreciable processing, power, or memory themselves. Hence, such card readers 22 and access cards 14 are usually referred to as passive devices. By contrast, the centralized controller 30 and server 50 of the access control system 10 is usually a well-designed and sophisticated device with fail-operational capabilities and advanced hardware and algorithms to perform fast decision making. Moreover, the decision making process of the centralized controller 30 is fundamentally based on performing a lookup of the static permissions 25. The static permissions 25 may contains policy based rules (e.g., one rule might provide that user 12 is not allowed entry into a given room), which change only when the policy changes (e.g., the static permissions 25 might be changed to provide that user 12 can henceforth enjoy the privileges of a given room). It should also be appreciated that the terminology "policy based rules" does not usually mean the same thing as "static permissions" and a database of static permissions 25 does not necessarily contain any policy-based rules. However, a static permission 25 does represent a very simple rule such as "user X has access to reader Y at time Z". In an embodiment, the static permissions 25 in a PACS 10 context exist as collection of "allow" permissions, stating that users 12 are allowed to access readers 22. In operation, the controller 130 tries to find a permission 25 that allows access to the resource 26 and in the absence of such permission 25 it denies access. Hence there may not actually be explicit deny decisions. The overall policy is "deny access unless found a static permission which allows access." Policies are implemented in a set of rules that governs authorization. As an enterprise grow larger, with increasing numbers of users 12 and readers 22, the administration of the static permission 25 may become burdensome. In order to simplify administration, the permissions 25 are often organized into groups and roles which are sometimes called access levels. Administrators 27 then assign groups 16 of permissions 25 to cardholder credentials which simplifies administration. However, the number of groups grows over time and can become complex, time consuming, and error-prone to maintain. Furthermore, cardholders 12 can accumulate unused or infrequently used permissions 25, that cannot be easily removed from cardholders 12 given that their combined with other permissions 25 within access levels.

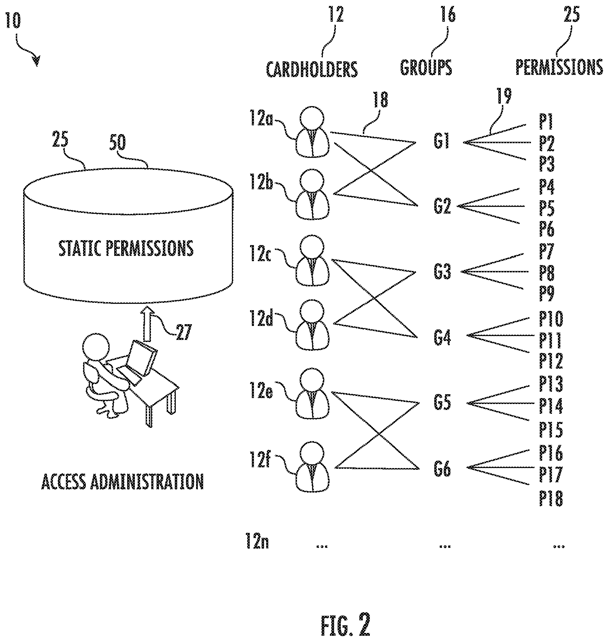

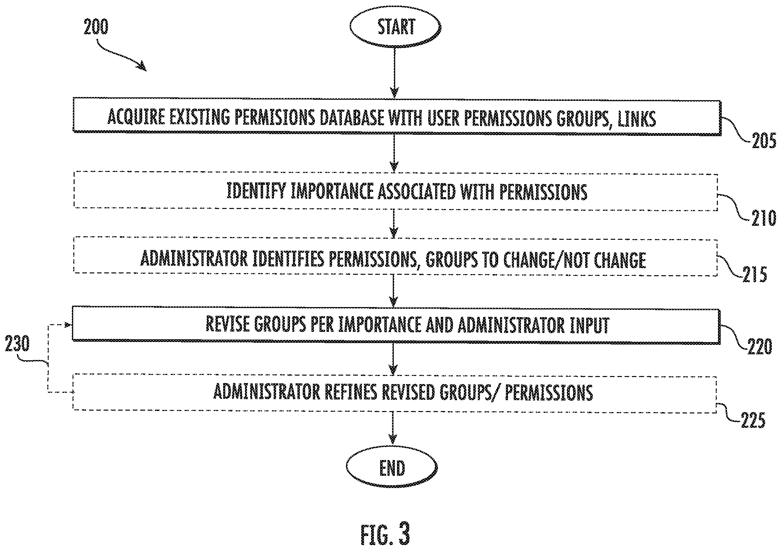

Turning now to FIG. 2, to address these concerns, described herein in an embodiment is a method 200 (See FIG. 3) of managing and/or optimizing the grouping of static permissions 25 and linking cardholders 12 to new groups 16. In one embodiment, the methodology 200 ensures that cardholders 12 keep the same permissions 25 as previously held but fewer groups 16 have to be maintained in the system 10. In another embodiment, described herein is a method 200 to manage and optimize groups 16 in approximate way, reducing number of groups 16 even further. In this embodiment, cardholders 12 forfeit unused or lesser used permissions 25. For example, if a cardholder 12 has permissions 25 that have never been exercised, they could be eliminated. Moreover, the optimization of groups 16 of permissions may also include reclassification of permissions 25 designated by administrator 27.

FIG. 2 depicts a simplified diagram of a conventional set of permissions 25 and groupings 16. In the simple example given cardholders 12 have overlapping permissions 25 and as a result of time or changing permissions overlapping links 18 and 19 to multiple groups 16. For example in the figure, cardholders 12a and 12b are members of and linked 18 to groups 16 G1 and G2 in order to have links 19 to permissions 25 P1-P3, and P4-P6 respectively. Likewise, cardholders 12c and 12d are members of and linked 18 to groups 16 G3 and G4 in order to links 19 have permissions 25 P7-P9, and P10-P12 respectively. Moreover, cardholders 12e and 12f are members of and linked 18 to groups 16 G5 and G6 in order to have links 19 permissions 25 P13-P15, and P16-P18 respectively.

Combining permissions 25 into groups 16 is related to mining roles within Role Based Access Control (RBAC) framework as employed for access control administration. In a RBAC model permissions 25 are grouped into roles which are assigned to users 12a-12n. Roles are user groups 16 with access to a specific set of resources based on a common need or function, e.g., technician, engineer, employee, manager, administrator 27, and the like. Roles could also be departmental groupings in an enterprise, e.g., finance, legal, tax, engineering, etc. To define the roles, experts in collaboration with administrators 27 either define them in top-down approach based on a deep understanding of the organizational business processes, or in bottom-up approach which uses data mining to identify meaningful groupings of existing permissions 25 into roles. Several criteria are used to evaluate the quality of role mining, such as total number of roles generated or compatibility with the organizational structure and processes. In an embodiment, experts could, for example, be security officers for a facility that do not run day-to-day administration of access permission in the facility but may have oversight.

In all these models, permissions 25 are always either present or absent and there is no notion of the importance (or the degree of importance) of the permission 25. One of the differentiators employed in the described embodiments is the introduction of "importance of the permissions" which will allow better definition and better implementation of all existing approximation methods for RBAC infrastructure. Importance of permissions 25 is a qualifier, attribute, or scale associated with a particular permission 25 employed to weight it in the assignment of roles or groups 16.

Turning now to FIG. 3, depicting a flowchart of the methodology 200 of managing and/or optimizing the access control permission groups 16 is depicted. In an embodiment, the PACS system 10 acquires and loads information from existing static permission database 25 the permissions 25, the permission groups 16 and cardholder 12a-12n information including the links 18 to permission groups 16 and the links 19 between groups 16 and permissions 25 as depicted at process step 205. It should be appreciated that it is possible that there are no permissions 25 or cardholders 12 yet defined in the system 10 for start-up applications. At process step 210, the PACS 10 optionally computes the importance factor of cardholder-permission 25 assignments for some or all assignments in the system 10 (e.g. as a number from continuous interval [0,1] or [-1,1]).

In an embodiment, importance 1 means that the permission assignment must be preserved, while importance 0 means that the permission assignment is not important to preserve and may be removed by the optimization algorithm. Other importance values (between 0 and 1) indicate different degrees of importance. Importance -1 might indicate permission assignments that are undesirable, e.g. security threats, and must be removed. The importance factor can be computed by combining multiple factors. For example, importance of preserving permission 25 for a cardholder 12a-12n based on frequency and time of use, e.g. how often the permission 25 is used by the user12-12n and the time of the last usage. Such a determination may readily be ascertained from the historical access events saved in a database. Another factor that may be employed in the determination of importance is the user's 12a-12n role or other attributes associated with the user 12a-12n. Moreover, the user 12a-12n may have a given relative importance, for example based on position in the enterprise, role or based on the number of permissions 25 that the user 12a-12n has. A further factor that may be consider for assigning importance would be if the system 10 contains rule-based access policies, those rules can be used to infer importance of permissions 25 assignments for individual cardholders 12a-12n. For example, if rule-based policy does not allow cardholder 12a-12n to have a permission 25, then a system might assign a negative score to the cardholder-permission assignment. It will be appreciated that in application it may be advantageous to combine one or more measures of importance into a composite importance measure. Continuing now with FIG. 3, at process step 215, administrators 27 for the system 10 may optionally provide additional input, for example by directly assigning scores to cardholder permission assignments from [-1,1] range to indicate the permission importance beyond the automatically inferred scores from step 210. Administrators 27 may also identify groups 16 that should not be changed by the management or optimization procedure 200 or conversely, groups 16 that may or should be changed. It should be appreciated that both process steps 210 and 215 are optional. If no importance measures are provided, the process 200 can assume a default importance score for each cardholder permission assignment, including but not limited to assigning a score of 1 to all existing assignments (that is, the most conservative, all permission assignments must be preserved). If no additional administrator input is provided then a default assumption may be that all groups 16 may be changed. Other default assumptions can be used as well and specified in the system.

Turning now to process step 220, an revision procedure computes the new set of groups 16 and links 18 and 19 between cardholders 12 and groups 16, and groups 16 and permissions 25 while incorporating an optional administrator 27 input from the previous step (e.g. not changing any groups 16 or permissions 25 that administrator 27 indicated as unchangeable and ensuring that some groups 16 are changed). In an embodiment, the revision procedure of step 220 is an optimization that preserves the set of cardholder permission assignments exactly. In another embodiment, the revision procedure of step 220 is an optimization that preserves the set of cardholder permission assignments approximately. In the approximate optimization, some cardholders 12 may lose some of the permissions 25 that are identified as of low importance. In another embodiment, in order to preserve groups a non-existing permission may be added to a user to facilitate with the revising and simplification. In one embodiment, the management or optimization procedure 200 can be implemented by expressing the regrouping problem as an Integer Linear Programming (ILP) model and using conventional, known ILP solvers to find optimal solution. In order to formulate the ILP model, the regrouping problem of constructing permissions groups 16 is interpreted as a problem of Boolean Matrix Decomposition. In the Boolean Matrix Decomposition, an input matrix A is established, containing a cell for each cardholder 12 and each permission 25, with each cell containing a Boolean value (0 or 1) where 1 indicates that there exists an assignment for the corresponding cardholder and permission while 0 indicates there is no such assignment. The object then is to "decompose" that matrix A, into two matrices B and C that are to be determined, where matrix B indicates cardholder-group assignments and matrix C indicates group-permission assignments respectively. In order to determine dimensions of matrices B and C, first, the number of desired groups 16 that we want to generate is fixed. Later, the process may be repeated with different target number of groups 16 if desired. For each cell in matrices B and C a separate Boolean variable is included. Assigning those Boolean variables determines the content of cells B and C. A number of ILP equations is then constructed that link entries in matrix A to combination of entries in matrices B and C using standard matrix decomposition relationships. Basically, cardholder X has a permission Y in matrix A if and only if there exists a group Z such that there is a cardholder-group assignment (X-Z) in matrix B and there is a group-permission assignment (Z-Y) in matrix C. The standard ILP solver is asked to find assignment to all the variables in B and C so that the decomposition relationship holds. The above process is representative of method to reproduce the number of permissions exactly for a specific number of groups. Finally, the number of groups 16 can be reduced or optimized by repeating the above process with repeatedly smaller number of groups 16 until the solver can find no more solutions. Furthermore, the above procedure can also be updated to take into account the costs associated with importance of preserving each of the cardholder-permission assignments. One such technique is to not enforce the matrix decomposition relationships for those cells in matrix A for which we do not care whether the permission is preserved.

Continuing with FIG. 3, at process step 225 an administrator 27 optionally reviews recommended groups 16 and associated statistical information or metadata associated with the revised groups 16 (e.g., total number of groups, their average size, percentage reduction, permissions retained, permission eliminated, and the like). If needed, the administrator 27 performs actions over computed groups 16 to further refine the revisions. For example, in an embodiment the administrator 27 may elect to reject or accept some of the revised groups 16. In another embodiment, the administrator 27 may elect to edit some of the group 16 definitions (for example by adding or removing permissions 25 assigned to the group 16). In yet another embodiment, the administrator 27 may elect to edit the name, any information, and other metadata associated with the revised group 16. Further yet, in another embodiment, the administrator 27 may elect to repeat an optimization as depicted by return arrow 230 which incorporates the revised inputs or the process terminates.

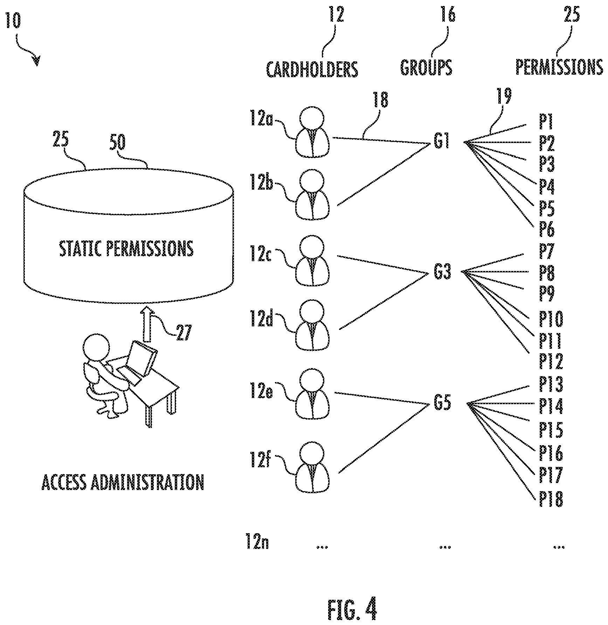

Turning now to FIG 4, where a simplified diagram of a revised set of permissions 25 and groups 16 are depicted. In the simple example given cardholders 12 have revised groups 16 maintaining the same permissions 25 as defined from the example of FIG. 2. For example in the figure, cardholders 12a and 12b are now members of only a single group 16 G1 in order to have permissions 25 P1-P6 respectively. Likewise, cardholders 12c and 12d are now members of only group 16 G3 in order maintain permissions 25 P7-P12 respectively. Moreover, cardholders 12e and 12f are members of group 16 G5 in order to have permissions 25 P13-P18 respectively.

It should be appreciated that for the purpose of the described embodiments, the deployment mechanism such as a PACS 10 depicted in FIG. 1 is not as critical and can include other, more recent forms of deployment. For example, if permission groups 16 are defined in the cloud environment and the edge devices consult the remote server 50 after every card swipe - that is still applicable. Moreover, even if the implementation goes beyond the physical access control - for example to configuring LDAP permission groups on an IT server - that domain might still be applicable, as long as it deals with permission groups 16 and we have some means to determine the relative importance of those permissions 25. Advantageously, organizations can reduce the cost and error-rate of administration of Physical Access Control Systems 10 by removing unnecessary permissions 25 and access levels as well as simplifying the number of groups 16. Organizations can improve security by redefining and assigning access levels that have infrequently used permissions 25.

The terminology used herein is for the purpose of describing particular embodiments only and is not intended to be limiting. While the description has been presented for purposes of illustration and description, it is not intended to be exhaustive or limited to the form disclosed. Many modifications, variations, alterations, substitutions, or equivalent arrangement not hereto described will be apparent to those of ordinary skill in the art without departing from the scope of the disclosure as defined by the appended claims. Additionally, while the various embodiments have been described, it is to be understood that aspects may include only some of the described embodiments. Accordingly, embodiments are not to be seen as being limited by the foregoing description, but is only limited by the scope of the appended claims.

## Claims

1. A computer implemented method (200) of managing access control permissions groups (16), the method comprising:
acquiring (205) a permissions database having user access control permissions groups and links between a user (12) and at least one permission (25) of a plurality of permissions and the groups;
identifying (210) an importance associated with a permission of the plurality of permissions associated with the user, wherein the importance is an importance to preserve a permission of the plurality of permissions associated with the user;
identifying an importance of groups, the importance of groups being to preserve definitions of permission groups associated with each existing permission group;
wherein the importance of groups is based on at least one of frequency of use of permissions (25), time of use of permissions, last use of a permissions within the group; a number of cardholders (12) assigned to group, the roles of cardholders assigned to group, an average number of permissions the cardholders assigned to group have, and a rule based policy; and
revising (220) the access control permissions groups in response to the importance associated with the permission of the plurality of permissions associated with the user and the importance of groups.

2. The method (200) of managing access control permissions groups (16) of claim 1 wherein the importance is based on at least one of frequency of use of a permission (25), time of use of a permission, and last use of a permission.

3. The method (200) of managing access control permissions groups (16) of claim 1 wherein the importance is based on at least one of a role of the user (12), a number of permissions (25) the user has, an assigned importance, and a rule based policy.

4. The method (200) of managing access control permissions groups (16) of claim 1 further comprising an administrator (27) identifying an importance to remove a permission (25) of the plurality of permissions associated with the user (12).

5. The method (200) of managing access control permissions groups (16) of claim 1 further comprising an administrator (27) identifying an importance to preserve a permission (25) of the plurality of permissions associated with the user (12).

6. The method (200) of managing access control permissions groups (16) of claim 1 further comprising at least one of an administrator (27) identifying an importance to preserve a permissions group already defined in the system.

7. The method (200) of managing access control permissions groups (16) of claim 1 wherein the acquiring includes an existing permissions database.

8. The method (200) of managing access control permissions groups (16) of claim 1 wherein the revising (220) includes managing the permissions groups to maintain all existing permissions (25).

9. The method (200) of managing access control permissions groups (16) of claim 1 wherein the revising (220) includes managing the permissions groups permitting an existing permission (25) to be eliminated.

10. The method (200) of managing access control permissions groups (16) of claim 1 wherein the revising (220) includes managing the permissions groups permitting a non-existing permission (25) to be added.

11. The method (200) of managing access control permissions groups (16) of claim 1 further comprising an administrator (27) refining (225) the revised access control permissions groups.

12. The method (200) of managing access control permissions groups (16) of claim 11 wherein the refining (225) includes the administrator (27) at least one of rejecting a revised access control permissions group; accepting a revised access control permissions group; editing a revised access control permissions group; and editing data associated with a revised access control permissions group.

13. A physical access control system (10) for protecting a resource (26) with optimized access control permissions groups (16), comprising:
a plurality of users (12), each user having a credential (14), the user presenting the credential to request access to a protected resource, the user having assigned access control permissions groups, the access control permissions groups having assigned to a set of access control permissions (25);
a reader (20) in operative communication with the credential and configured to read user information from the credential, wherein the user information includes at least a user ID;
a controller (22) executing process to determine if the user is to be granted access to the resource based on the user information and the permissions database, the controller disposed at the protected resource to permit access to the resource; and
wherein the access control permissions groups have been revised in accordance with the method (200) of claim 1.

## Patentansprüche

1. Computerimplementiertes Verfahren (200) zum Verwalten von Berechtigungsgruppen (16) für die Zugriffskontrolle, wobei das Verfahren umfasst:
Erhalten (205) eine Berechtigungsdatenbank, die Berechtigungsgruppen für die Zugriffskontrolle von Benutzern und Verknüpfungen zwischen einem Benutzer (12) und mindestens einer Berechtigung (25) einer Vielzahl von Berechtigungen und den Gruppen aufweist;
Identifizieren (210) einer Bedeutung, die einer Berechtigung der Vielzahl von einem Benutzer zugeordneten Berechtigungen zugeordnet ist, wobei die Bedeutung eine Bedeutung zum Bewahren einer Berechtigung der Vielzahl von einem Benutzer zugeordneten Berechtigungen darstellt;
Identifizieren einer Bedeutung von Gruppen, wobei die Bedeutung von Gruppen Bewahren von Definitionen von jeder existierenden Berechtigungsgruppe zugeordneten Berechtigungsgruppen darstellt;
wobei die Bedeutung von Gruppen auf mindestens einem von einer Häufigkeit der Verwendung von Berechtigungen (25), einem Zeitpunkt der Verwendung von Berechtigungen, einer letzten Verwendung einer Berechtigung innerhalb der Gruppe; einer Anzahl von einer Gruppe zugewiesenen Karteninhabern (12), der Rollen von einer Gruppe zugewiesenen Karteninhabern, einer durchschnittlichen Anzahl von Berechtigungen der einer Gruppe zugewiesenen Karteninhabern und einer regelbasierten Richtlinie basiert; und
Überarbeiten (220) der Berechtigungsgruppen für die Zugangskontrolle als Reaktion auf die Bedeutung, die der Berechtigung der Vielzahl von dem Benutzer zugeordneten Berechtigungen zugeordnet ist, und die Bedeutung von Gruppen.

2. Verfahren (200) zum Verwalten von Berechtigungsgruppen (16) für die Zugriffskontrolle nach Anspruch 1, wobei die Bedeutung auf mindestens einem von einer Häufigkeit der Verwendung einer Berechtigung (25), einem Zeitpunkt der Verwendung einer Berechtigung und einer letzten Verwendung einer Berechtigung basiert.

3. Verfahren (200) zum Verwalten von Berechtigungsgruppen (16) für die Zugriffskontrolle nach Anspruch 1, wobei die Bedeutung auf mindestens einem von einer Rolle des Benutzers (12), einer Anzahl von Berechtigungen (25) in Besitz des Benutzers, einer zugewiesenen Bedeutung und einer regelbasierten Richtlinie basiert.

4. Verfahren (200) zum Verwalten von Berechtigungsgruppen (16) für die Zugriffskontrolle nach Anspruch 1, ferner umfassend einen Administrator (27), der eine Bedeutung zum Entfernen einer Berechtigung (25) der Vielzahl von einem Benutzer (12) zugeordneten Berechtigungen identifiziert.

5. Verfahren (200) zum Verwalten von Berechtigungsgruppen (16) für die Zugriffskontrolle nach Anspruch 1, ferner umfassend einen Administrator (27), der eine Bedeutung zum Bewahren einer Berechtigung (25) der Vielzahl von einem Benutzer (12) zugeordneten Berechtigungen identifiziert.

6. Verfahren (200) zum Verwalten von Berechtigungsgruppen (16) für die Zugriffskontrolle nach Anspruch 1, ferner umfassend mindestens einen von einem Administrator (27), der eine Bedeutung zum Bewahren einer bereits in dem System definierten Berechtigungsgruppe identifiziert.

7. Verfahren (200) zum Verwalten von Berechtigungsgruppen (16) für die Zugriffskontrolle nach Anspruch 1, wobei das Erhalten eine vorhandene Berechtigungsdatenbank beinhaltet.

8. Verfahren (200) zum Verwalten von Berechtigungsgruppen (16) für die Zugriffskontrolle nach Anspruch 1, wobei das Überarbeiten (220) Verwalten der Berechtigungsgruppen zum Aufrechterhalten aller vorhandenen Berechtigungen (25) beinhaltet.

9. Verfahren (200) zum Verwalten von Berechtigungsgruppen (16) für die Zugriffskontrolle nach Anspruch 1, wobei das Überarbeiten (220) Verwalten der Berechtigungsgruppen unter Erlauben des Eliminierens einer vorhandenen Berechtigung (25) beinhaltet.

10. Verfahren (200) zum Verwalten von Berechtigungsgruppen (16) für die Zugriffskontrolle nach Anspruch 1, wobei das Überarbeiten (220) Verwalten der Berechtigungsgruppen unter Erlauben des Hinzufügens einer nicht vorhandenen Berechtigung (25) beinhaltet.

11. Verfahren (200) zum Verwalten von Berechtigungsgruppen (16) für die Zugriffskontrolle nach Anspruch 1, ferner umfassend einen Administrator (27), der die überarbeiteten Berechtigungsgruppen für die Zugriffskontrolle verfeinert (225) .

12. Verfahren (200) zum Verwalten von Berechtigungsgruppen (16) für die Zugriffskontrolle nach Anspruch 11, wobei das Verfeinern (225) beinhaltet, dass der Administrator (27) mindestens eines von Folgenden durchführt: Zurückweisen einer überarbeiteten Berechtigungsgruppe für die Zugriffskontrolle; Akzeptieren eine überarbeiteten Berechtigungsgruppe für die Zugriffskontrolle; Bearbeiten einer überarbeiteten Berechtigungsgruppe für die Zugriffskontrolle; und Bearbeiten einer überarbeiteten Berechtigungsgruppe für die Zugriffskontrolle zugeordneten Daten.

13. Physisches System (10) für die Zugriffskontrolle zum Schützen einer Ressource (26) mit optimierten Berechtigungsgruppen (16) für die Zugriffskontrolle, umfassend:
eine Vielzahl von Benutzern (12), wobei jeder Benutzer einen Berechtigungsnachweis (14) aufweist, wobei der Benutzer den Berechtigungsnachweis zum Anfordern von Zugriff auf eine geschützte Ressource präsentiert, wobei dem Benutzer Berechtigungsgruppen für die Zugriffskontrolle zugewiesen sind, wobei den Berechtigungsgruppen für die Zugriffskontrolle ein Satz von Berechtigungen (25) für die Zugriffskontrolle zugewiesen ist;
ein Lesegerät (20) in Wirkkommunikation mit dem Berechtigungsnachweis und zum Lesen von Benutzerinformationen von dem Berechtigungsnachweis konfiguriert, wobei die Benutzerinformationen mindestens eine Benutzerkennung beinhalten;
eine Steuerung (22), die einen Prozess zum Bestimmen ausführt, ob dem Benutzer basierend auf den Benutzerinformationen und der Berechtigungsdatenbank Zugriff auf die Ressource gewährt werden soll, wobei die Steuerung an der geschützten Ressource angeordnet ist, um Zugriff auf die Ressourcen zu erlauben; und wobei die Berechtigungsgruppen für die Zugriffskontrolle gemäß dem Verfahren (200) nach Anspruch 1 überarbeitet wurden.

## Revendications

1. Procédé mis en œuvre par ordinateur (200) de gestion des groupes d'autorisations de contrôle d'accès (16), le procédé comprenant :
l'acquisition (205) d'une base de données d'autorisations comportant des groupes d'autorisations de contrôle d'accès utilisateur et des liens entre un utilisateur (12) et au moins une autorisation (25) parmi une pluralité d'autorisations et les groupes ;
l'identification (210) d'une importance associée à une autorisation parmi la pluralité d'autorisations associées à l'utilisateur, dans lequel l'importance est une importance pour préserver une autorisation de la pluralité d'autorisations associées à l'utilisateur ;
l'identification d'une importance de groupes, l'importance des groupes étant de préserver les définitions de groupes d'autorisations associés à chaque groupe d'autorisation existant ;
dans lequel l'importance des groupes est basée sur au moins l'un de la fréquence d'utilisation des autorisations (25), de l'heure d'utilisation des autorisations, de la dernière utilisation d'une autorisation au sein du groupe ; d'un nombre de titulaires de cartes (12) attribués au groupe, des rôles des titulaires de cartes attribués au groupe, d'un nombre moyen d'autorisations dont disposent les titulaires de cartes attribués au groupe, et d'une politique basée sur des règles ; et
la révision (220) des groupes d'autorisations de contrôle d'accès en réponse à l'importance associée à l'autorisation de la pluralité d'autorisations associées à l'utilisateur et à l'importance des groupes.

2. Procédé (200) de gestion de groupes d'autorisations de contrôle d'accès (16) selon la revendication 1, dans lequel l'importance est basée sur au moins l'une de la fréquence d'utilisation d'une autorisation (25), de l'heure d'utilisation d'une autorisation et de la dernière utilisation d'une autorisation.

3. Procédé (200) de gestion de groupes d'autorisations de contrôle d'accès (16) selon la revendication 1, dans lequel l'importance est basée sur au moins l'un d'un rôle de l'utilisateur (12), d'un nombre d'autorisations (25) dont dispose l'utilisateur, d'une importance attribuée et d'une politique basée sur des règles.

4. Procédé (200) de gestion de groupes d'autorisations de contrôle d'accès (16) selon la revendication 1, comprenant en outre un administrateur (27) identifiant une importance pour supprimer une autorisation (25) de la pluralité d'autorisations associées à l'utilisateur (12).

5. Procédé (200) de gestion de groupes d'autorisations de contrôle d'accès (16) selon la revendication 1, comprenant en outre un administrateur (27) identifiant une importance pour préserver une autorisation (25) de la pluralité d'autorisations associées à l'utilisateur (12).

6. Procédé (200) de gestion de groupes d'autorisations de contrôle d'accès (16) selon la revendication 1, comprenant en outre au moins l'un d'un administrateur (27) identifiant une importance pour préserver un groupe d'autorisations déjà défini dans le système.

7. Procédé (200) de gestion de groupes d'autorisations de contrôle d'accès (16) selon la revendication 1, dans lequel l'acquisition inclut une base de données d'autorisations existante.

8. Procédé (200) de gestion de groupes d'autorisations de contrôle d'accès (16) selon la revendication 1, dans lequel la révision (220) comporte la gestion des groupes d'autorisations pour conserver toutes les autorisations existantes (25).

9. Procédé (200) de gestion de groupes d'autorisations de contrôle d'accès (16) selon la revendication 1, dans lequel la révision (220) comporte la gestion des groupes d'autorisations permettant d'éliminer une autorisation existante (25).

10. Procédé (200) de gestion de groupes d'autorisations de contrôle d'accès (16) selon la revendication 1, dans lequel la révision (220) comporte la gestion des groupes d'autorisations permettant d'ajouter une autorisation (25) non existante.

11. Procédé (200) de gestion de groupes d'autorisations de contrôle d'accès (16) selon la revendication 1, comprenant en outre un administrateur (27) affinant (225) les groupes d'autorisations de contrôle d'accès révisés.

12. Procédé (200) de gestion de groupes d'autorisations de contrôle d'accès (16) selon la revendication 11, dans lequel l'affinement (225) comporte, de la part de l'administrateur (27), au moins l'un : du rejet d'un groupe d'autorisations de contrôle d'accès révisé ; de l'acceptation d'un groupe d'autorisations de contrôle d'accès révisé ; de la modification d'un groupe d'autorisations de contrôle d'accès révisé ; et la modification de données associées à un groupe d'autorisations de contrôle d'accès révisé.

13. Système de contrôle d'accès physique (10) pour protéger une ressource (26) avec des groupes d'autorisations de contrôle d'accès optimisés (16), comprenant :
une pluralité d'utilisateurs (12), chaque utilisateur ayant un justificatif d'identité (14), l'utilisateur présentant le justificatif d'identité pour demander l'accès à une ressource protégée, l'utilisateur ayant attribué des groupes d'autorisations de contrôle d'accès, les groupes d'autorisations de contrôle d'accès ayant été attribués à un ensemble d'autorisations de contrôle d'accès (25) ;
un lecteur (20) en communication opérationnelle avec le justificatif d'identité et configuré pour lire des informations utilisateur à partir du justificatif d'identité, dans lequel les informations utilisateur comportent au moins un identifiant utilisateur ;
un contrôleur (22) exécutant un processus pour déterminer si l'utilisateur doit se voir accorder l'accès à la ressource sur la base des informations utilisateur et de la base de données d'autorisations, le dispositif de commande étant disposé au niveau de la ressource protégée pour permettre l'accès à la ressource ; et
dans lequel les groupes d'autorisations de contrôle d'accès ont été révisés conformément au procédé (200) de la revendication 1.
